# EUROPÄISCHE PATENTSCHRIFT

(11) **EP 2 739 492 B1**
(45) Veröffentlichungstag und Bekanntmachung des Hinweises auf die Patenterteilung: **11.05.2016**
(21) Anmeldenummer: 12741013.2
(22) Anmeldetag: 01.08.2012
(51) Int. Cl.: B29C 70/32, B29L 31/00, B29C 70/08, B60G 13/06, F16F 9/32

(54) **STOSSDÄMPFER FÜR EIN FAHRZEUG IN LEICHTBAUWEISE**
SHOCK ABSORBER FOR A VEHICLE HAVING A LIGHTWEIGHT DESIGN
AMORTISSEUR DE CHOC POUR UN VÉHICULE DE CONSTRUCTION LÉGÈRE

(30) Priorität: 04.08.2011 DE 102011109362
(43) Veröffentlichungstag der Anmeldung: 11.06.2014
(73) Patentinhaber: ThyssenKrupp Bilstein GmbH, 58256 Ennepetal (DE)
(72) Erfinder: LUCZAK, Hanno, 45527 Hattingen (DE)
(74) Vertreter: Braun-Dullaeus Pannen Patent- und Rechtsanwälte
(86) Internationale Anmeldenummer: PCT/EP2012/065076
(87) Internationale Veröffentlichungsnummer: WO 2013/017638

(56) Entgegenhaltungen:
- EP-A1- 0 471 073
- EP-A2- 2 060 797
- JP-A- 59 049 352
- US-A- 3 706 615
- US-A1- 2005 166 984

## Beschreibung

Die vorliegende Erfindung betrifft einen Stoßdämpfer für ein Fahrzeug mit einem Stoßdämpferrohr, in dem wenigstens ein Stoßdämpferkolben gleitend geführt ist, wobei das Stoßdämpferrohr aus einem Kohlefaserverbundwerkstoff ausgebildet ist. Die Erfindung richtet sich weiterhin auf die Verwendung eines Rohres aus einem Kohlefaserverbundwerkstoff zur Bildung eines Stoßdämpferrohres für einen Stoßdämpfer sowie ein Verfahren zur Herstellung eines Stoßdämpferrohres für einen Stoßdämpfer.

### STAND DER TECHNIK

Aus der DE 100 03 046 A1 ist ein Stoßdämpfer bekannt, der für ein Fahrzeug Verwendung finden kann, und der Stoßdämpfer weist ein Stoßdämpferrohr auf, der aus einem Aluminiummaterial ausgebildet ist. Innenseitig ist in das aus Aluminium ausgebildete Rohr eine dünnwandige Hülse eingesetzt, die bei einem im wesentlichen in radialer Richtung verlaufenden Umformvorgang zumindest des Aluminiumrohres fest mit diesem verbunden wird. Dadurch soll erreicht werden, dass das Gewicht des Stoßdämpfers reduziert wird, indem das Stoßdämpferrohr nicht vollständig aus einem Stahlwerkstoff hergestellt wird. Lediglich die dünnwandige Hülse ist als Stahlhülse ausgebildet, und die Grundstruktur des Stoßdämpfers wird aus einem Aluminiummaterial gebildet. Nachteilhaft ist jedoch ein auch dann verbleibendes großes Gesamtgewicht des Stoßdämpfers, wenn das Stoßdämpferrohr aus metallischen Werkstoffen hergestellt wird.

Aus der DE 103 13 477 B3 ist ein Zylinderrohr für einen Arbeitszylinder bekannt, und das Zylinderrohr weist ein aus thermoplastischem Kunststoff ausgebildetes Innenrohr und ein das Innenrohr radial umschließenden, koaxial angeordneten Außenrohr auf, das aus einem faserverstärkten thermoplastischen Kunststoff hergestellt ist. Dieser faserverstärkte Kunststoff kann beispielsweise ein Kohlefaserverbundwerkstoff sein. Eine Weiterbildung des dargestellten Arbeitszylinders, um diesen für die Bildung eines Stoßdämpferrohres für den Stoßdämpfer eines Fahrzeugs zu qualifizieren, ist jedoch im Zusammenhang mit dem offenbarten Arbeitszylinder nicht angegeben.

Die FR 2 473 961 A1 behandelt ein Zylinderrohr für einen Stoßdämpfer, das aus einem Kohlefaserverbundwerkstoff hergestellt ist. Dadurch kann das Gewicht des Stoßdämpfers reduziert werden, da ein Kohlefaserverbundwerkstoff gegenüber einem metallischen Werkstoff, insbesondere Stahl, leichter ist. Nachteile ergeben sich allerdings hinsichtlich der inneren Gleitoberfläche als Gleitpartner für beispielsweise den Stoßdämpferkolben, und es ist bekannt, dass Rohre aus Kohlefaserverbundwerkstoff bei wechselnden inneren Drücken ihren Durchmesser ändern, was als das sogenannte Atmen bezeichnet wird, und somit gewöhnliche Gleitbeschichtungen auf der inneren Gleitoberfläche nicht geeignet sind.

### OFFENBARUNG DER ERFINDUNG

Es ist daher die Aufgabe der vorliegenden Erfindung, einen Stoßdämpfer für ein Fahrzeug in einer Leichtbauweise bereit zu stellen, der trotz der Verwendung eines leichten Werkstoffes den Anforderungen im Fahrbetrieb eines Fahrzeugs weiterhin entsprechen kann.

Diese Aufgabe wird ausgehend von einem Stoßdämpfer für ein Fahrzeug mit einem Stoßdämpferrohr gemäß dem Oberbegriff des Anspruchs 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass die Innenseite des Stoßdämpferrohres eine Beschichtung aufweist, die den Gleitpartner für den im Stoßdämpferrohr geführten Stoßdämpferkolben bildet, wobei die Beschichtung aus einem Epoxid gebildet ist.

Die Erfindung geht dabei von dem Gedanken aus, einen aus einem Kohlefaserverbundwerkstoff ausgebildeten Grundkörper des Stoßdämpferrohres zugleich mit einer Beschichtung auf der Innenseite des Stoßdämpferrohres auszuführen, die beständig ist und den Gleitpartner des Stoßdämpferkolbens bildet. Damit kann das Stoßdämpferrohr ohne metallische Komponenten aufgebaut werden, sodass das Gewicht des Stoßdämpferrohres gegenüber einer Ausführung aus einem Aluminium-Grundkörper und einer Stahlhülse weiter reduziert werden kann. Durch die Beschichtung auf der Innenseite des Stoßdämpferrohres wird vermieden, dass der Kohlefaserverbundwerkstoff mit seiner Faserkomponente bereits den Gleitpartner zur gleitenden Führung des Stoßdämpferkolbens bildet, da bei Kontakt des beweglichen Stoßdämpferkolbens mit der Faserkomponente des Kohlefaserwerkstoffes die so gebildete Gleitpaarung Schaden nehmen kann.

Das Stoßdämpferrohr wird endseitig mit Dichtelementen beispielsweise gegen ein Verschlusselement oder gegen ein Verbindungselement abgedichtet, und die Beschichtung bildet dabei zugleich die Kontaktfläche der Dichtelemente. Im Stoßdämpferrohr können mehrere Stoßdämpferkolben gleitend geführt sein, und so kann beispielsweise ein erster Stoßdämpferkolben durch einen Ventilkolben gebildet sein, an den eine Kolbenstange angeordnet ist, und als weiterer Stoßdämpferkolben kann beispielsweise ein Trennkolben vorgesehen sein, um eine erste Fluidkammer von einer zweiten Fluidkammer beweglich zu trennen. Dabei können sämtliche im Stoßdämpfer beweglich geführten Elemente, insbesondere sämtliche Kolben, über der Beschichtung auf der Innenseite des Stoßdämpferrohres abgleiten.

Erfindungsgemäß kann die Beschichtung auf der Innenseite des Stoßdämpferrohres eine nichtmetallische Beschichtung aufweisen, indem diese aus einem Epoxid gebildet ist. Mit weiterem Vorteil kann der Kohlefaserverbundwerkstoff eine Matrix aus Epoxid aufweisen, wobei das die Beschichtung bildende Epoxid insbesondere gleich oder ähnlich dem die Matrix bildenden Epoxid ist, und wobei insbesondere der Kohlefaserverbundwerkstoff einen Faservolumenanteil von 60% aufweisen kann.

Über der Wanddicke des Stoßdämpferrohres bildet sich damit ein Kohlefaserverbundwerkstoff mit einer Matrix aus, die bei einem gleichbleibenden Epoxid - Verbundanteil jedoch nicht bis zur Oberfläche der Innenseite des Stoßdämpferrohres reicht. Das Epoxid, das über der gesamten Dicke der Wand des Stoßdämpferrohres vorhanden ist, kann stoffeinheitlich ausgebildet sein, und über die radial innenliegende Faserlage der Faserkomponente hinaus erstreckt sich nach innen die Beschichtung aus weiterem Epoxid, wodurch auf einfach Weise verhindert ist, dass der Stoßdämpferkolben mit der Faserkomponente des Faserverbundwerkstoffes in Kontakt gelangt. Der 60%-ige Faservolumenanteil bezieht sich dabei auf den Kohlefaserverbundwerkstoff ohne die Beschichtung, sodass sich ein Restvolumenanteil von 40% ergibt, der mit dem Epoxid aufgefüllt ist.

Die Beschichtung kann beispielsweise eine Dicke von 10µm bis 200µm, bevorzugt von 20µm bis 150µm und besonders bevorzugt von 30µm bis 100µm aufweisen, wobei insbesondere die Beschichtung eine Oberflächenrauheit aufweisen kann, die geringer ist als ein Wert von Rz10 und die insbesondere eine Oberflächenrauheit von Rz5 aufweist. Die hohe Oberflächengüte der Innenseite des Stoßdämpferrohres, die durch die Oberfläche der Beschichtung gebildet wird, wird durch eine hohe Oberflächengute eines Wickeldorns gebildet, auf den die Beschichtung beispielsweise vor Aufwicklung des Kohlefaserverbundwerkstoffes aufgebracht werden kann. Ist die Beschichtung, beispielsweise das Epoxid, auf den Wickeldorn aufgebracht, so kann der Kohlefaserverbundwerkstoff auf den Wickeldorn aufgewickelt und anschließend ausgehärtet werden. Dabei bildet sich die hohe Oberflächengüte des Wickeldorns auf die Innenseite des Stoßdämpferrohres ab, die mit beispielsweise Rz5 hinreichend ist, um eine gleitgünstige und im langfristigen Gebrauch des Stoßdämpfers schadenfreie Führung des Stoßdämpferkolbens zu ermöglichen.

Mit besonderem Vorteil kann die Beschichtung und der Kohlefaserverbundwerkstoff in einem gemeinsamen, insbesondere thermischen Härteprozess ausgehärtet werden. Das Härten des Kohlefaserverbundwerkstoffes mit der Beschichtung kann in Anordnung auf den Wickeldorn erfolgen, und durch die Härtung kann der Kohlefaserverbundwerkstoff mit der Beschichtung einen leichten Durchmesserzuwachs erfahren, sodass das so gebildete Stoßdämpferrohr leicht vom Wickeldorn entnommen werden kann. Der Härteprozess kann auf einer bestimmten Temperaturführung des Kohlefaserverbundwerkstoffes mit der Beschichtung beruhen, ferner möglich ist ein Härteprozess basierend auf einer elektromagnetischen Bestrahlung, beispielsweise UV- Strahlung, oder basierend auf der Einwirkung von Ultraschall.

Nach einer vorteilhaften Weiterbildung des erfindungsgemäßen Stoßdämpfers kann an einer ersten Endseite des Stoßdämpferrohres ein Verbindungselement zur Verbindung des Stoßdämpfers mit einem Radträger des Fahrzeugs und an einer zweiten Endseite des Stoßdämpferrohres ein Verschlusselement zur dichtenden Hindurchführung einer Kolbenstange angeordnet sein. Dabei kann die Verbindung des Verbindungselementes und/oder des Verschlusselementes mit dem Stoßdämpferrohr durch eine Klebeverbindung und/oder durch ein formschließendes Umwickeln wenigstens eines Teils des Verbindungselementes und/oder des Verschlusselementes mit dem Kohlefaserverbundwerkstoff gebildet sein. Nach einer weiteren vorteilhaften Ausführungsform kann das Verbindungselement und/oder das Verschlusselement an das jeweilige Ende des Stoßdämpferrohres auch mit einer Formschlussverbindung an dieses angeordnet werden, insbesondere in Kombination mit einer Klebeverbindung, um die Verbindung fluiddicht auszuführen. Ein besonderer Vorteil entsteht dann, wenn das Stoßdämpferrohr einen gleichbleibenden, insbesondere an den Endseiten unveränderlichen Innen- und Außendurchmesser aufweist, sodass das Stoßdämpferrohr von einem Halbzeug-Rohr auf erforderliche Länge abgelängt werden kann.

Die vorliegende Erfindung richtet sich ferner auf die Verwendung eines Rohres aus einem Kohlefaserverbundwerkstoff zur Bildung eines Stoßdämpferrohres für einen Stoßdämpfer, wobei im Stoßdämpferrohr wenigstens ein Stoßdämpferkolben gleitend geführt ist und wobei das Stoßdämpferrohr auf der Innenseite eine Beschichtung aus einem Epoxid aufweist, die den Gleitpartner für den im Stoßdämpferrohr geführten Stoßdämpferkolben bildet. Die Erfindung macht sich dabei den Gedanken zu Nutze, an sich bekannte Rohre aus Kohlefaserverbundwerkstoffen zur Verwendung als Stoßdämpferrohr zu qualifizieren, insbesondere indem auf der Innenseite des Körpers, der durch den Kohlefaserverbundwerkstoff gebildet ist, eine Epoxid-Beschichtung aufzubringen, die die Gleitoberfläche für den im Stoßdämpferrohr geführten Stoßdämpferkolben bildet. Die Merkmale und Vorteile des vorstehend beschriebenen Stoßdämpfers können bei der Verwendung eines Rohres aus einem Kohlefaserverbundwerkstoff entsprechend genutzt werden.

Die vorliegende Erfindung richtet sich weiterhin auf ein Verfahren zur Herstellung eines Stoßdämpferrohres für einen Stoßdämpfer, in dem wenigstens ein Stoßdämpferkolben gleitend geführt ist, wobei das Verfahren wenigstens die Schritte des Bereitstellens eines Wickeldorns und wenigstens einer Kohlefaserverbundwerkstoffbahn, des Wickelns der zumindest einen Kohlestoffverbundwerkstoffbahn auf den Wickeldorn mit mindestens einer in Bezug auf den Wickeldorn axialen und wenigstens einer radialen Wickelkomponente zur Bildung eines Stoßdämpferrohres und das Aushärten des Kohlefaserverbundwerkstoffs aufweist. Dabei ist vorgesehen, dass auf der Innenseite des Stoßdämpfers eine Beschichtung aus einem Epoxid angeordnet wird.

Nach einer möglichen vorteilhaften Ausführungsform kann die Beschichtung auf der Innenseite des Stoßdämpferrohres angeordnet werden, indem vor Beginn des Wickelns der Kohlefaserverbundwerkstoffbahn auf den Wickeldorn die Beschichtung aufgebracht wird. Die Aufbringung der Beschichtung, nämlich des Epoxids, erfolgt dann durch ein Aufpinseln oder ein Aufsprühen auf den Wickeldorn. Anschließend kann die Kohlefaserverbundwerkstoffbahn auf den Wickeldorn aufgewickelt werden, wobei die Beschichtung die sich bildende Innenseite des Stoßdämpferrohres bildet.

Nach einer alternativen Ausführungsform kann die Beschichtung nach einer Entnahme des Stoßdämpferrohres vom Wickeldorn auf die Innenseite des Stoßdämpferrohres durch ein Auftragverfahren wie beispielsweise ein Aufsprühen aufgetragen werden.

Mit weiterem Vorteil kann die wenigstens eine Kohlenfaserverbundwerkstoffbahn mit wenigstens einer axialen und wenigstens einer radialen Wickelkomponente durch eine Relativbewegung zwischen der anlaufenden Kohlenfaserverbundwerkstoffbahn und dem Wickeldorn in Axialrichtung des Wickeldorns auf diesen aufgewickelt werden. Die axiale und die radiale Wickelkomponente kann sowohl in Längsrichtung des Stoßdämpfers, in Umfangsrichtung des Stoßdämpfers oder auf einer beliebigen Diagonalen zwischen der Längsrichtung und der Umfangsrichtung des Stoßdämpfers ausgerichtet sein. Insbesondere kann die Kohlenfaserverbundwerkstoffbahn in mehreren Lagen Axialkomponenten, Radialkomponenten und/oder Diagonalkomponenten aufweisen, die beispielsweise über der aufgebauten Dicke des Stoßdämpferrohres in abwechselnder Lagerichtung angeordnet sind.

Auf dem oder axial-angrenzend an den Wickeldorn kann ein Verbindungselement und/oder ein Verschlusselement angeordnet werden, wobei die wenigstens eine Kohlenfaserverbundwerkstoffbahn an den Wickeldorn und auf wenigstens einen Teil des Verbindungselementes und /oder des Verschlusselementes gewickelt wird. Damit kann eine formschlüssige Verbindung zwischen dem Verbindungselement und/oder dem Verschlusselement erzeugt werden, wobei das Verbindungselement und/oder Verschlusselement beispielsweise derart an den Wickeldorn angeordnet wird, dass die Kohlenfaserverbundwerkstoffbahn bis über das Verbindungselement und/oder das Verschlusselement hinweg auf dieses aufgewickelt werden kann, um einen homogenen Rohrkörper zur Bildung des Stoßdämpferrohres zu schaffen.

### BEVORZUGTE AUSFÜHRUNGSFORM DER ERFINDUNG

Weitere, die Erfindung verbessernde Maßnahmen werden nachstehend gemeinsam mit der Beschreibung eines gemeinsamen Ausführungsbeispiels der Erfindung anhand der Figuren näher dargestellt. Es zeigt:
- Fig. 1: eine quergeschnittene Ansicht eines Ausführungsbeispiels eines Stoßdämpfers mit den Merkmalen der vorliegenden Erfindung und
- Fig. 2: eine Detailansicht eines Stoßdämpfers mit einem Stoßdämpferrohr und einem endseitig am Stoßdämpferrohr angeordneten Verschlusselement.

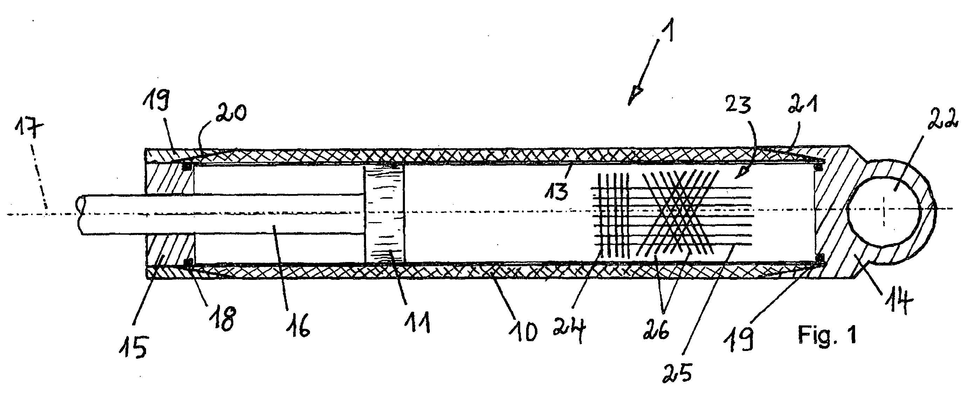

Fig. 1 zeigt in einer quergeschnittenen Ansicht einen Stoßdämpfer 1 für ein Fahrzeug, wobei die Darstellung des Stoßdämpfer 1 abstrahiert und damit vereinfacht ist. Der Stoßdämpfer 1 weist ein Stoßdämpferrohr 10 auf, und im Stoßdämpferrohr 10 ist ein Stoßdämpferkolben 11 entland der Längsachse 17 des Stoßdämpfers 1 längsbeweglich geführt. Am Stoßdämpferkolben 11 ist eine Kolbenstange 16 angeordnet, und die Kolbenstange 16 ist aus einem Verschlusselement 15, das endseitig das Stoßdämpferrohr 10 abschließt, fluiddicht herausgeführt.

Das Stoßdämpferrohr 10 ist aus einem Kohlefaserverbundwerkstoff ausgebildet und auf der Innenseite 12 ist eine Beschichtung 13 aufgebracht, die den Gleitpartner für den im Stoßdämpferrohr 10 geführten Stoßdämpferkolben 11 bildet. Die Beschichtung 13 bedeckt über der gesamten Länge des Stoßdämpferrohres 10 die Innenseite 12, so dass die Beschichtung 13 den Gleitpartner des Stoßdämpferkobens 11 über der gesamten Hublänge des Stoßdämpfers 1 bildet. Die Beschichtung 13 ist durch ein Epoxid gebildet, das das gleiche Epoxid sein kann, wie die Matrix des Kohlefaserverbundwerkstoffs bildende Epoxid.

Die Dicke der Beschichtung 13 weist eine Dicke von 30 µm bis 10 µm und die Oberflächenrauheit beträt Rz5, so dass eine gleitgünstige, dauerhafte Hubbewegung des Stoßdämpferkolbens 11 im Stoßdämpferrohr 10 möglich ist.

Die Beschichtung 13 ist gemeinsam mit dem Kohlefaserverbundwerkstoff des Stoßdämpferrohrs 10 thermisch ausgehärtet, und das Epoxid der Beschichtung 13 bildet sich mit dem Epoxid des Kohlefaserverbundwerkstoffes stoffeinheitlich aus.

Das Verschlusselement 15 ist mit einem Dichtelement 18 versehen, sodass das Verschlusselement 15 fluiddicht im Stoßdämpferrohr 10 angeordnet ist. Um das Verschlusselement 15 herum ist ein Ringelement 19 angeordnet, das einen konischen Abschnitt 20 aufweist, der mit einem konischen Ende des aus dem Kohlefaserverbundwerkstoff hergestellten Stoßdämpferrohr 10 korrespondiert. Wird das Ringelement 19 mit dem konischen Abschnitt 20 über das Ende des Stoßdämpferrohres 10 angeordnet, so kann das Ringelement 19 mit dem Stoßdämpferrohr 10 verklebt werden, wodurch zugleich das Verschlusselement 15 fest am Ende des Stoßdämpferrohrs 10 angeordnet ist. Das Dichtelement 18 dichtet dabei gegen die Beschichtung 13 der Innenseite 12 des Stoßdämpferrohres 10 ab. Auf der dem Verschlusselement 15 gegenüberliegenden Seite des Stoßdämpferrohres 10 weist dieses ein Verbindungselement 14 auf, das ebenfalls über einen konischen Abschnitt 21 mit der Endseite des Stoßdämpferrohres 10 verklebt ist. Im Verbindungselement 14 ist ein weiteres Dichtelement 19 angeordnet, das ebenfalls gegen die Beschichtung 13 auf der Innenseite 12 des Stoßdämpferrohres 10 abdichtet. Das Verbindungselement 14 weist ein Verbindungsauge 22 auf, mit dem der Stoßdämpfer 1 mit dem Radträger des Fahrzeugs verbunden werden kann.

Das Stoßdämpferrohr 10 ist aus einem Kohlefaserverbundwerkstoff hergestellt, und der Kohlefaserverbundwerkstoff ist durch ein Wickelverfahren einer Kohlefaserverbundwerkstoffbahn in verschiedenen Wickelrichtungen 23 hergestellt, die mit ihrer Laufrichtung beispielhaft im Stoßdämpferrohr 10 angedeutet sind. Die Wickelrichtungen 23 können eine radiale Wickelkomponente 24 in Umfangsrichtung, eine axiale Wickelkomponente 25 in Längsrichtung und verschiedene diagonale Wickelkomponenten 26 aufweisen. Dabei können die diagonalen Wickelkomponenten 26 unter jedem beliebigen Winkel zwischen der radialen Wickelkomponente 24 und der axialen Wickelkomponente 25 verlaufen. Erst durch die Überlagerung verschiedener Wickelkomponenten 24, 25 und/oder 26 zur Bildung des Stoßdämpferrohres 10 kann dieses mit hinreichenden

Festigkeitseigenschaften ausgeführt werden, um ein aus einem Kohlefaserverbundwerkstoff hergestellte Stoßdämpferrohr 10 zur Bildung eines Stoßdämpfers 1 zu qualifizieren.

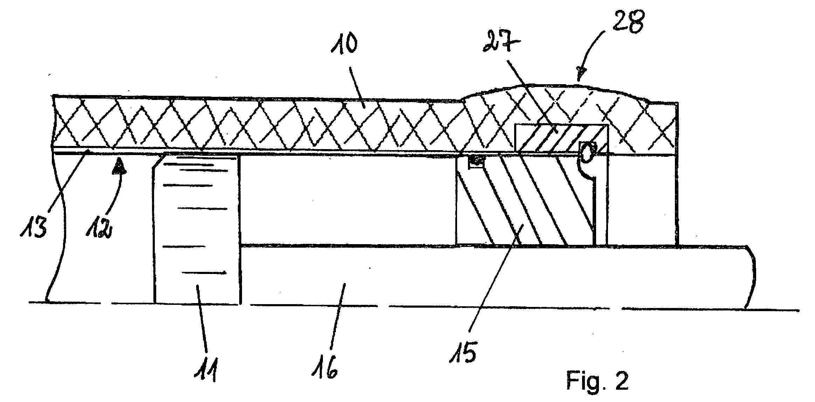

Fig. 2 zeigt eine Detailansicht des Stoßdämpfers 1 mit dem Stoßdämpferrohr 10 im Bereich des Verschlusselementes 15. Das Verschlusselement 15 ist mit einem Einsatzelement 27 im Stoßdämpferrohr 10 aus dem Kohlefaserverbundwerkstoff gesichert, und der Kohlefaserverbundwerkstoff umschließt in einem umschließenden Wickelabschnitt 28 das Einsatzelement 27, wodurch das Einsatzelement 27 im Stoßdämpferrohr 10 fest angeordnet ist. Auf der Innenseite 12 des Stoßdämpferrohrs 10 ist die Beschichtung 13 in nicht maßstäblicher Weise angeordnet gezeigt, über die der Stoßdämpferkolben 11 mit der angeordneten Kolbenstange 16 axial abgleitet.

Damit ist ein weiteres Ausführungsbeispiel zur Herstellung des Stoßdämpferrohres 10 gezeigt, das nicht von einem Halbzeug-Rohr abgelängt wird, nachdem dieses auf einem Wickeldorn gewickelt und mit der Beschichtung 13 innenbeschichtet wurde, und das Stoßdämpferrohr 10 wird auf einem Wickeldorn gemeinsam mit dem Einsatzelement 27 gewickelt. Dabei erstrecken sich die Bahnen des Kohlefaserverbundwerkstoffes sowohl über den - nicht näher gezeigten - Wickeldorn als auch über das Einsatzelement 27. Nach Entnahme des Wickeldorns verbleibt das Einsatzelement 27 in der gezeigten Anordnung im Stoßdämpferrohr 10 und ist durch den umschließenden Wickelabschnitt 28 in diesem gesichert.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiven Einzelheiten, räumliche Anordnungen und Verfahrensschritte können sowohl für sich als auch in den verschiedensten Kombinationen erfindungswesentlich sein.

### Bezugszeichenliste

- 1: Stoßdämpfer

- 10: Stoßdämpferrohr
- 11: Stoßdämpferkolben
- 12: Innenseite
- 13: Beschichtung
- 14: Verbindungselement
- 15: Verschlusselement
- 16: Kolbenstange
- 17: Längsachse
- 18: Dichtelement
- 19: Ringelement
- 20: konischer Abschnitt
- 21: konischer Abschnitt
- 22: Verbindungsauge
- 23: Wickelrichtung
- 24: radiale Wickelkomponente
- 25: axiale Wickelkomponente
- 26: diagonale Wickelkomponente
- 27: Einsatzelement
- 28: umschließender Wickelabschnitt

## Patentansprüche

1. Stoßdämpfer (1) für ein Fahrzeug mit einem Stoßdämpferrohr (10), in dem wenigstens ein Stoßdämpferkolben (11) gleitend geführt ist, wobei das Stoßdämpferrohr (10) aus einem Kohlefaserverbundwerkstoff ausgebildet ist, **dadurch gekennzeichnet, dass** auf die Innenseite (12) des Stoßdämpferrohres (10) eine Beschichtung (13) aufgebracht ist, die den Gleitpartner für den im Stoßdämpferrohr (10) geführten Stoßdämpferkolben (11) über der gesamten Hublänge des Stoßdämpfers (1) bildet, wobei die Beschichtung (13) aus einem Epoxid gebildet ist.

2. Stoßdämpfer (1) nach Anspruch 1, **dadurch gekennzeichnet, dass** der Kohlefaserverbundwerkstoff eine Matrix aus Epoxid aufweist, wobei das die Beschichtung (13) bildende Epoxid insbesondere gleich oder ähnlich dem die Matrix bildenden Epoxid ist, und wobei insbesondere der Kohlefaserverbundwerkstoff einen Faservolumenanteil von 60% aufweist.

3. Stoßdämpfer (1) nach Anspruch 1 oder 2, **dadurch gekennzeichnet, dass** die Beschichtung (13) eine Dicke von 10µm bis 200µm, bevorzugt von 20µm bis 150µm und besonders bevorzugt von 30µm bis 100µm aufweist und/oder dass die Beschichtung (13) eine Oberflächenrauheit aufweist, die geringer ist als ein Wert von Rz 10, insbesondere eine Oberflächenrauheit mit einem Wert von Rz 5 aufweist.

4. Stoßdämpfer (1) nach einem der vorgenannten Ansprüche, **dadurch gekennzeichnet, dass** die Beschichtung (13) und der Kohlefaserverbundwerkstoff in einem gemeinsamen, insbesondere thermischen Härteprozess ausgehärtet sind.

5. Stoßdämpfer (1) nach einem der vorgenannten Ansprüche, **dadurch gekennzeichnet, dass** an einer ersten Endseite des Stoßdämpferrohres (10) ein Verbindungselement (14) zur Verbindung des Stoßdämpfers (1) mit einem Radträger des Fahrzeugs und an einer zweiten Endseite des Stoßdämpferrohres (10) ein Verschlusselement (15) zur dichtenden Hindurchführung einer Kolbenstange (16) angeordnet ist, wobei die Verbindung des Verbindungselementes (14) und/oder des Verschlusselementes (15) mit dem Stoßdämpferrohr (10) durch eine Klebeverbindung und/oder durch ein formschließendes Umwickeln wenigstens eines Teils des Verbindungselementes (14) und/oder des Verschlusselementes (15) mit dem Kohlefaserverbundwerkstoff gebildet ist.

6. Verwendung eines Rohres aus einem Kohlefaserverbundwerkstoff zur Bildung eines Stoßdämpferrohres (10) für einen Stoßdämpfer (1), wobei im Stoßdämpferrohr (10) wenigstens ein Stoßdämpferkolben (11) gleitend geführt ist, und wobei auf der Innenseite (12) eine Beschichtung (13) aus einem Epoxid aufgebracht ist, die den Gleitpartner für den im Stoßdämpferrohr (10) geführten Stoßdämpferkolben (11) über der gesamten Hublänge des Stoßdämpfers (1) bildet.

7. Verwendung eines Rohres aus einem Kohlefaserverbundwerkstoff gemäß Anspruch 6 für einen Stoßdämpfer (1) nach einem der Ansprüche 2 bis 5.

8. Verfahren zur Herstellung eines Stoßdämpferrohres (10) für einen Stoßdämpfer (1), in dem wenigstens ein Stoßdämpferkolben (11) gleitend geführt ist, wobei das Verfahren wenigstens die folgenden Schritte aufweist:
- Bereitstellen eines Wickeldorns und wenigstens einer Kohlefaserverbundwerkstoffbahn,
- Wickeln der zumindest einen Kohlefaserverbundwerkstoffbahn auf den Wickeldorn mit wenigstens einer in Bezug auf den Wickeldorn axialen und wenigstens einer radialen Wickekomponente zur Bildung eines Stoßdämpferrohres (10),
- Aushärten des Kohlefaserverbundwerkstoffes,
wobei auf der Innenseite (12) des Stoßdämpferrohres (10) über der gesamten Hublänge des Stoßdämpfers (1) eine Beschichtung (13) aus einem Epoxid aufgebracht wird.

9. Verfahren nach Anspruch 8, **dadurch gekennzeichnet, dass** die Beschichtung (13) auf der Innenseite (12) des Stoßdämpferrohres (10) angeordnet wird, indem die Beschichtung auf den Wickeldorn aufgebracht wird, und die Kohlefaserverbundwerkstoffbahn dann auf die Beschichtung gewickelt wird.

10. Verfahren nach Anspruch 8, **dadurch gekennzeichnet, dass** die Beschichtung (13) nach einer Entnahme des Stoßdämpferrohres (10) vom Wickeldorn auf die Innenseite (12) des Stoßdämpferrohres (10) durch ein Auftragverfahren aufgetragen wird.

11. Verfahren nach einem der Ansprüche 8 bis 10, **dadurch gekennzeichnet, dass** die wenigstens eine Kohlefaserverbundwerkstoffbahn mit wenigstens einer axialen und wenigstens einer radialen Wickelkomponente durch eine Relativbewegung zwischen der anlaufenden Kohlefaserverbundwerkstoffbahn und dem Wickeldorn in Axialrichtung des Wickeldorns auf diesen aufgewickelt wird.

12. Verfahren nach einem der Ansprüche 8 bis 11, **dadurch gekennzeichnet, dass** auf dem oder axial angrenzend an den Wickeldorn ein Verbindungselement (14) und/oder ein Verschlusselement (15) angeordnet wird, wobei die wenigstens eine Kohlefaserverbundwerkstoffbahn auf den Wickeldorn und auf wenigstens einen Teil des Verbindungselementes (14) und/oder des Verschlusselementes (15) gewickelt wird.

## Claims

1. A shock absorber (1) for a vehicle, having a shock absorber tube (10), in which at least one shock absorber piston (11) is guided in a sliding manner, the shock absorber tube (10) being formed from a carbon fibre composite material, **characterised in that** a coating (13) is applied to the inner side (12) of the shock absorber tube (10), said coating forming the sliding partner for the shock absorber piston (11) guided in the shock absorber tube (10) over the entire stroke length of the shock absorber (1), wherein the coating (13) is formed from an epoxide.

2. The shock absorber (1) according to Claim 1, **characterised in that** the carbon fibre composite material has a matrix consisting of epoxide, wherein the epoxide forming the coating (13) is in particular identical or similar to the epoxide forming the matrix, and wherein in particular the carbon fibre composite material has a volumetric fraction of fibres of 60%.

3. The shock absorber (1) according to Claim 1 or 2, **characterised in that** the coating (13) has a thickness of 10 µm to 200 µm, preferably from 20 µm to 150 µm and particularly preferably from 30 µm to 100 µm and/or the coating (13) has a surface roughness that is less than a value of Rz 10, in particular a surface roughness with a value of Rz 5.

4. The shock absorber (1) according to any one of the preceding claims, **characterised in that** the coating (13) and the carbon fibre composite material are cured in a common, in particular thermal curing process.

5. The shock absorber (1) according to any one of the preceding claims, **characterised in that** a connecting element (14) for connecting the shock absorber (1) to a wheel support of the vehicle is arranged on a first end side of the shock absorber tube (10), and a closure element (15) for passing through a piston rod (16) in a sealing manner is arranged on a second end side of the shock absorber tube (10), wherein the connection of the connecting element (14) and/or of the closure element (15) to the shock absorber tube (10) is formed by an adhesive bond and/or by a form-fitting winding of the carbon fibre composite material around at least a part of the connecting element (14) and/or of the closure element (15).

6. A use of a tube consisting of a carbon fibre composite material to form a shock absorber tube (10) for a shock absorber (1), wherein at least one shock absorber piston (11) is guided in the shock absorber tube (10) in a sliding manner, and wherein a coating (13) consisting of an epoxide is applied to the inner side (12), said coating forming the sliding partner for the shock absorber piston (11) guided in the shock absorber tube (10) over the entire stroke length of the shock absorber (1).

7. The use of a tube consisting of a carbon fibre composite material according to Claim 6 for a shock absorber (1) according to any one of Claims 2 to 5.

8. A method for producing a shock absorber tube (10) for a shock absorber (1), in which at least one shock absorber piston (11) is guided in a sliding manner, wherein the method has at least the following steps:
- providing a winding mandrel and at least one carbon fibre composite material web,
- winding the at least one carbon fibre composite material web onto the winding mandrel with at least one axial winding component and at least one radial winding component in relation to the winding mandrel, to form a shock absorber tube (10),
- curing the carbon fibre composite material,
wherein a coating (13) consisting of an epoxide is applied to the inner side (12) of the shock absorber tube (10) over the entire stroke length of the shock absorber (1).

9. The method according to Claim 8, **characterised in that** the coating (13) is arranged on the inner side (12) of the shock absorber tube (10) by applying the coating to the winding mandrel, and the carbon fibre composite material web is then wound onto the coating.

10. The method according to Claim 8, **characterised in that** the coating (13) is applied to the inner side (12) of the shock absorber tube (10) by an application method after the shock absorber tube (10) has been removed from the winding mandrel.

11. The method according to any one of Claims 8 to 10, **characterised in that** the at least one carbon fibre composite material web is wound onto the winding mandrel with at least one axial winding component and at least one radial winding component by means of a relative movement between the accumulating carbon fibre composite material web and the winding mandrel in the axial direction of the winding mandrel.

12. The method according to any one of Claims 8 to 11, **characterised in that** a connecting element (14) and/or a closure element (15) is arranged on the winding mandrel or axially adjacent to the winding mandrel, wherein the at least one carbon fibre composite material web is wound onto the winding mandrel and onto at least a part of the connecting element (14) and/or of the closure element (15).

## Revendications

1. Amortisseur (1) pour un véhicule automobile comportant un tube d'amortisseur (10), dans lequel au moins un piston d'amortisseur (11) est guidé de manière coulissante, dans lequel le tube d'amortisseur (10) est constitué d'un matériau composite de fibres de carbone, **caractérisé en ce que** sur le côté intérieur (12) du tube d'amortisseur (10) un revêtement (13) est appliqué, qui forme le partenaire de coulissement pour le tube d'amortisseur (11) guidé dans le tube d'amortisseur (10) sur la totalité de la longueur de course de l'amortisseur (1), dans lequel le revêtement (13) est constitué d'une résine époxy.

2. Amortisseur (1) selon la revendication 1, **caractérisé en ce que** le matériau composite de fibres de carbone présente une matrice en résine époxy, dans lequel la résine époxy formant le revêtement (13) est notamment identique ou similaire à la résine époxy formant la matrice, et dans lequel notamment le matériau composite de fibres de carbone présente une fraction en volume de fibres de 60%.

3. Amortisseur (1) selon la revendication 1 ou 2, **caractérisé en ce que** le revêtement (13) présente une épaisseur de 10 µm à 200 µm, de préférence de 20 µm à 150 µm et de manière particulièrement préférée de 30 µm à 100 µm et/ou **en ce que** le revêtement (13) présente une rugosité de surface, qui est inférieure à une valeur de Rz 10, notamment présente une rugosité de surface avec une valeur de Rz 5.

4. Amortisseur (1) selon une des revendications précédentes, **caractérisé en ce que** le revêtement (13) et le matériau composite de fibres de carbone sont durcis dans le cadre d'un processus de durcissement thermique, notamment commun.

5. Amortisseur (1) selon une des revendications précédentes, **caractérisé en ce que** sur un premier côté d'extrémité du tube d'amortisseur (10) un élément de liaison (14) pour relier l'amortisseur (1) avec un support de roue du véhicule et sur un deuxième côté d'extrémité du tube d'amortisseur (10) un élément d'obturation (15) pour le guidage étanche à travers d'une tige de piston (16) est disposé, dans lequel la liaison de l'élément de liaison (14) et/ou de l'élément d'obturation (15) avec le tube d'amortisseur (10) est formée par une liaison par collage et/ou un enroulement par complémentarité de forme d'au moins une partie de l'élément de liaison (14) et/ou de l'élément d'obturation (15) avec le matériau composite de fibres de carbone.

6. Utilisation d'un tube constitué d'un matériau composite de fibres de carbone pour former un tube d'amortisseur (10) pour un amortisseur (1), dans lequel dans le tube d'amortisseur (10) au moins un piston d'amortisseur (11) est guidé de manière coulissante et dans lequel sur le côté intérieur (12) un revêtement (13) constitué d'une résiné époxy est appliqué, qui forme le partenaire de coulissement pour le piston d'amortisseur (11) guidé dans le tube d'amortisseur (10) sur la longueur de course totale de l'amortisseur (1).

7. Utilisation d'un tube constitué d'un matériau composite de fibres carbone selon la revendication 6 pour un amortisseur (1) selon une des revendications 2 à 5.

8. Procédé de fabrication d'un tube d'amortisseur (10) pour un amortisseur (1), dans lequel au moins un piston d'amortisseur (11) est guidé de manière coulissante, dans lequel le procédé présente au moins les étapes suivantes :
- fourniture d'un mandrin d'enroulage et d'au moins une bande de matériau composite de fibres de carbone,
- enroulage d'au moins une bande de matériau composite de fibres de carbone sur le mandrin d'enroulage avec au moins un composant d'enroulage axial et au moins un composant d'enroulage radial par rapport au mandrin d'enroulage pour former un tube d'amortisseur (10),
- durcissement du matériau composite de fibres de carbone,
dans lequel sur le côté intérieur (12) du tube d'amortisseur (10) sur la longueur de course totale de l'amortisseur (1) un revêtement (13) constitué d'une résine époxy est appliqué.

9. Procédé selon la revendication 8, **caractérisé en ce que** le revêtement (13) est disposé sur le côté intérieur (12) du tube d'amortisseur (10), en appliquant le revêtement sur le mandrin d'enroulage et la bande de matériau composite de fibres de carbone est ensuite enroulé sur le revêtement.

10. Procédé selon la revendication 8, **caractérisé en ce que** le revêtement (13) après un retrait du tube d'amortisseur (10) du mandrin d'enroulage est appliqué sur le côté intérieur (12) du tube d'amortisseur (10) par un procédé d'application.

11. Procédé selon une des revendications 8 à 10, **caractérisé en ce que** au la moins une bande de matériau composite de fibres de carbone est enroulée avec au moins un composant d'enroulage axiale et au moins un composant d'enroulage radial par un mouvement relatif entre la bande de matériau composite de fibres de carbone avançant et le mandrin d'enroulage dans la direction axiale du mandrin d'enroulage sur celui-ci.

12. Procédé selon une des revendications 8 à 11, **caractérisé en ce que** sur le mandrin d'enroulage ou axialement à proximité du mandrin d'enroulage un élément de liaison (14) et/ou un élément d'obturation (15) sont disposés, dans lequel au moins une bande de matériau composite de fibres de carbone est enroulée sur le mandrin d'enroulage et sur au moins une partie de l'élément de liaison (14) et/ou de l'élément d'obturation (15).
